# EUROPEAN PATENT SPECIFICATION

(11) **EP 0 958 150 B1**
(45) Date of publication and mention of the grant of the patent: **21.07.2004**
(21) Application number: 98904287.4
(22) Date of filing: 16.02.1998
(51) Int. Cl.: B60B 33/04

(54) **IMPROVEMENTS IN OR RELATING TO CASTOR WHEELS**
VERBESSERUNGEN AN ODER IN BEZIEHUNG MIT LENKROLLEN
ROULETTE PIVOTANTE AMELIOREE

(30) Priority: 14.02.1997 GB 9703129
(43) Date of publication of application: 24.11.1999
(73) Proprietor: R & D Marine Limited, Baldock, Hertfordshire SG7 6PD (GB)
(72) Inventor: FIRTH, Charles, David, Hertfordshire (GB); FIRTH, Roger, Hertfordshire (GB)
(74) Representative: Burrows, Anthony Gregory
(86) International application number: PCT/GB1998/000471
(87) International publication number: WO 1998/035841

(56) References cited:
- EP-A- 0 820 881
- WO-A-94/17694
- DE-A- 3 612 925
- DE-U- 9 211 745
- LU-A- 57 933
- US-A- 4 000 912

## Description

This invention relates to a castor wheel arrangement.

Many proposals have been made to reduce straight-ahead instability of wheeled vehicles having castor wheels. DE U1-9211745.7 showing the features of the preamble of claim 1 and EP-A-0820881 discloses two such proposals.

The castor wheel arrangement of DE U1-9211745.7 is intended for fitting to a wheeled vehicle in the form of a shopping trolley, a roll container, a dolly or the like as one of four self-steering castors. The vehicle has a flat bed to the underside of which are bolted four supporting plates. Each supporting plate has mounted thereon an annular connecting bearing by way of a horizontal, transverse, pivot pin and bearings welded to both the supporting plate and the connecting bearing. The connecting bearing mounts a bracket for turning about a swivel axis intersecting and perpendicular to the axis of the pivot pin. Each bracket mounts a ground wheel for rotation about an axis perpendicular to and offset from the swivel axis.

EP-A-0820881 discloses a castor arrangement for trolleys, furniture and the like, with a castor wheel and a castor mounting bracket in which the castor wheel rotates freely around a wheel axis and which in turn is mounted on an element allowing it to rotate freely around a swivel axis perpendicular to and offset from the wheel axis. The element pivots in a pair of bearing lugs around a tilting axis perpendicular to the swivel axis, so that it is movable between a normal position, in which the swivel axis is vertical, and a tilted position, the element in its normal position being pretensioned by a compression spring against turning towards its tilted position. In that normal position, it is urged by the spring against a stop projecting downwards from a supporting plate.

According to the present invention, there is provided a castor wheel arrangement comprising a roll turnable about a first axis, bracket means mounting said roll for turning about said axis and turnable about a second axis substantially perpendicular to said firsc axis, connecting means mounting said bracket means for turning about said second axis and turnable about a third axis substantially perpendicular to said second axis, supporting means mounting said connecting means for turning about said third axis, and limiting means limiting the degree of turning of said connecting means relative to said supporting means, said supporting means mounting said connecting means by way of a pin substantially co-axial with said third axis, characterised in that said supporting means mounts said connecting means by way of not only said pin but also a cap, the pin being borne at respective opposite ends in respective opposite side walls of said cap.

Owing to the invention, it is possible to minimise unwanted sideways veering of the supporting means, whilst allowing such sideways movement when desired.

The supporting means may take the form of a chassis of a trolley, for example a supermarket or airport trolley, where the castor wheel arrangement can constitute the or each front or rear wheel of the trolley.

In order that the invention may be clearly understood and readily carried into effect, reference will now be made, by way of example, to the accompanying drawings, in which:-
Figure 1 is a diagrammatic side elevation of a supermarket trolley, with the trolley being advanced in a forward direction,
Figure 2 shows a detail of Figure 1, but partly in vertical section,
Figure 3 shows a sectional plan view taken on the line III-III of Figure 2,
Figure 4 is a view similar to Figure 2, but with the trolley being advanced in a rearward direction,
Figure 5 is a view similar to Figure 2, but more fragmentary, of a modified version, and
Figure 6 is a view similar to Figure 4, but more fragmentary, of the modified version.

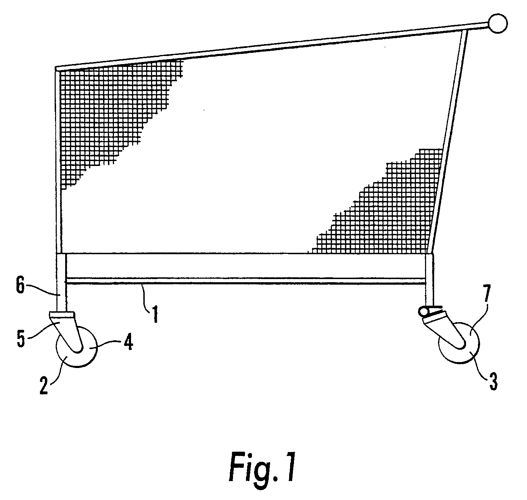

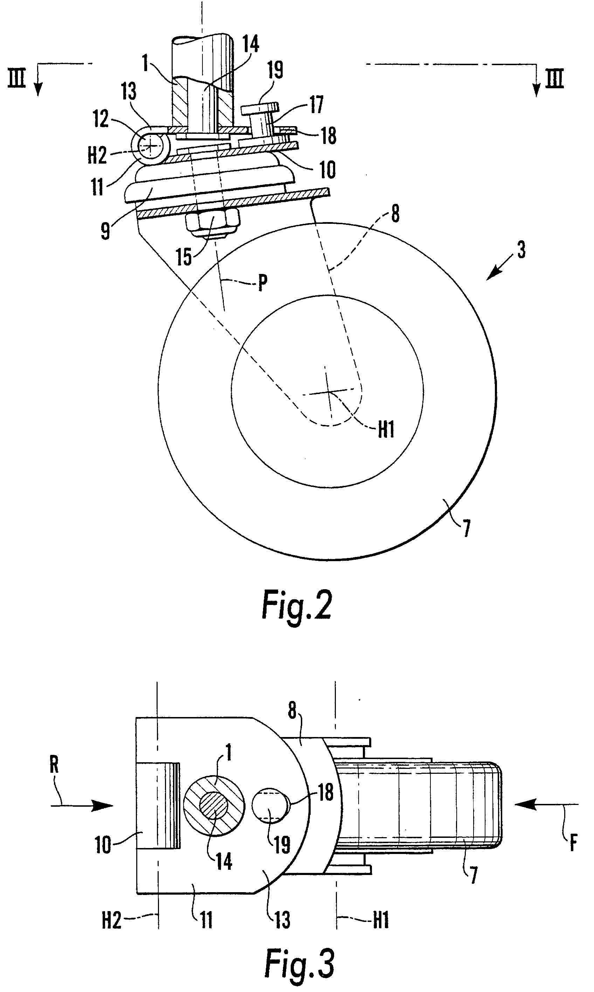

Figures 1 to 4 of the drawings show a supermarket trolley with castor wheel arrangements which are not in accordance with the present invention. Referring to Figures 1 to 4 of the drawings, the trolley has a frame 1 upon which is mounted a front pair of ground castor wheels (only the left-hand wheel 2 of which is seen) and a rear pair of ground castor wheels (only the left-hand wheel 3 of which is seen). Each castor wheel of the front pair consists of a roll 4, and a yoke-form bracket 5 mounting the roll 4 so that the roll is turnable about a horizontal axis and itself so mounted by a bearing 6 on the frame 1 that the bracket 5 and thus the roll 4 are turnable about a vertical axis.

Each of the rear castor wheels comprises a roll 7, a yoke-form bracket 8 mounting the roll 7 so that the roll is turnable about a first horizontal axis H1, and a hinge 11 whereof a lower leaf 10 so mounts the bracket 8 by way of a bearing 9 that the bracket 8 and the roll 7 are turnable about an axis P perpendicular to the axis H1, but offset relative to it. The upper leaf 13 of the hinge 11 is so fixedly mounted by a nut-and-bolt device 14 on the frame 1 that the leaf 10 and thus the bracket 8 and the roll 7 are turnable about the axis H2 of the hinge pivot pin 12, which is horizontal and perpendicular to the axis P, but offset relative to it. A nut-and-bolt device 15 sandwiches the bearing 9 between the bracket 8 and the leaf 10. The hinge 11 has a very restricted degree of opening, limited by a stud 16 fixed to the leaf 10 and having a neck 17 extending through an aperture 18 in the upper leaf 13 and a head 19 above the aperture 18 but too large to pass downwardly through it.

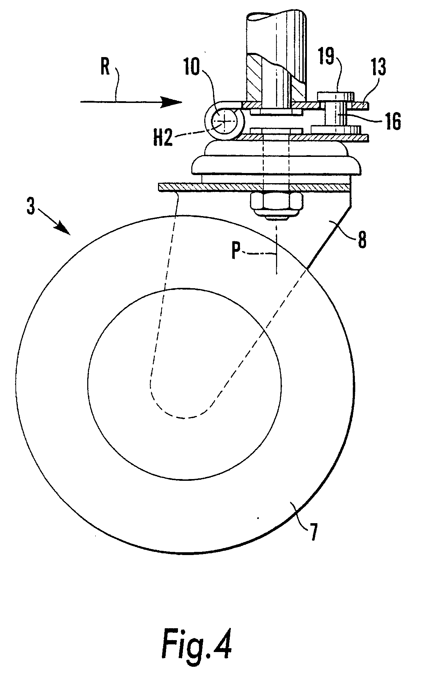

Figures 1 to 3 show the condition of each of the rear castor wheels when the trolley is being advanced in the forward direction F. In that condition, the hinge 11 is fully closed and the axis P is inclined downwardly and rearwardly, so that the wheel tends to remain in the vertical plane of the direction F, under the weight of the trolley and its contents. If the person pushing the trolley steers the trolley to the left or the right, the roll 7 is thereby urged about the axis P out of the plane of the direction F, but against the weight of the trolley and its contents, so that the rear of the frame 1 needs to be raised increasingly with increasing deviation from the direction F, to the extent that, if the person starts to pull the trolley in the rearward direction R, the axis P reaches the condition shown in Figure 4 in which the axis P is virtually vertical, in fact preferably inclined downwardly and very slightly forwardly, the extent of movement of the axis P about the axis H2 in a clockwise sense being limited by engagement of the head 19 with the flange 13.

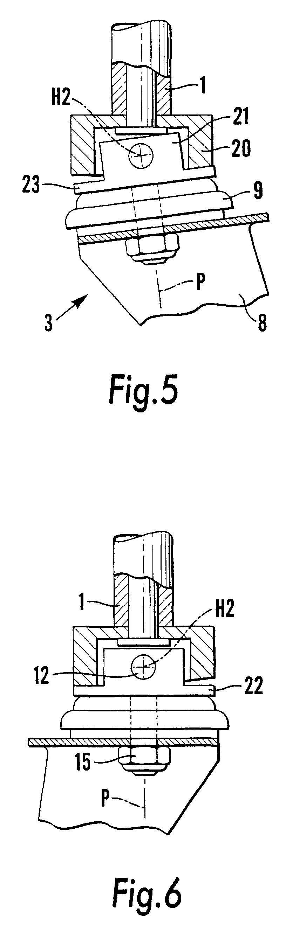

As illustrated in Figures 5 and 6, it is possible according to the invention to make each rear castor wheel more compact by arranging for the horizontal axis H2 to intersect, or come close to intersecting, the axis P. The hinge 11 has been dispensed with and, instead, the pivot pin 12 is borne at its opposite ends in respective opposite sides of a supporting cap 20 fixed to the frame 1, whilst the pin 12 carries a rocking member 21 to which the bracket 8 is pivotally connected by way of the nut-and-bolt device 15 and the bearing 9. The member 21 has a projection 21' into the cap 20 and has opposite arms 22 and 23 which, by respectively coming to abut against the rear and the front of the cap 20, limit respectively the anti-clockwise and clockwise turning of the member 21, and thus the items 7 to 9, about the axis H2.

Particular advantages of the castor wheel arrangements according to the invention are that no rearward movement of the trolley is required before a turn to the left or to the right, that no fifth wheel is required, that existing castor wheels on existing trolleys can easily and cheaply be replaced with the present castor wheels, and that, following such replacement, the nesting of the trolleys is not affected.

## Claims

1. A castor wheel arrangement comprising a roll (7) turnable about a first axis (H1), bracket means (8) mounting said roll (7) for turning about said axis (H1) and turnable about a second axis (P) substantially perpendicular to said first axis (H1), connecting means (21) mounting said bracket means (8) for turning about said second axis (P) and turnable about a third axis (H2) substantially perpendicular to said second axis (P), supporting means (1,20) mounting said connecting means (21) for turning about said third axis (H2), and limiting means (22, 23) limiting the degree of turning of said connecting means (21) relative to said supporting means (1,20), said supporting means (1,20) mounting said connecting means (21) by way of a pin (12) substantially co-axial with said third axis (H2), **characterised in that** said supporting means (1,20) mounts said connecting means (21) by way of not only said pin (12) but also a cap (20), the pin (12) being borne at respective opposite ends in respective opposite side walls of said cap (20) .

2. A castor wheel arrangement according to claim 1, wherein said third axis (H2) substantially intersects said second axis (P).

3. A castor wheel arrangement according to claim 1 or 2, wherein said supporting means (1,20) includes said cap (20).

4. A castor wheel arrangement according to any preceding claim, wherein said supporting means (1,20) includes a frame (1) of a trolley and said roll (7) is a ground roll (7) of said trolley.

## Patentansprüche

1. Lenkrollenanordnung mit einer Rolle (7), die um eine erste Achse (H1) drehbar ist, einer Haltevorrichtung (8), an der die Rolle (7) um die Achse (H1) sowie um eine zur ersten Achse (H1) im wesentlichen rechtwinklig verlaufende zweite Achse (P) drehbar befestigt ist, einer Verbindungsvorrichtung (21), an der die Haltevorrichtung (8) um die zweite Achse (P) sowie um eine zur zweiten Achse (P) im wesentlichen rechtwinklig verlaufende dritte Achse (H2) drehbar befestigt ist, einer Tragvorrichtung (1,20), an der die Verbindungsvorrichtung (21) um die dritte Achse (H2) drehbar befestigt ist, und einer Begrenzungsvorrichtung (22,23) zur Begrenzung des Drehwinkels der Verbindungsvorrichtung (21) relativ zu der Tragvorrichtung (1,20), wobei die Verbindungsvorrichtung (21) an der Tragvorrichtung (1,20) mittels eines Stifts (12) befestigt ist, der im wesentlichen koaxial mit der dritten Achse (H2) verläuft,
**dadurch gekennzeichnet, dass** die Verbindungsvorrichtung (21) an der Tragvorrichtung (1,20) nicht nur mittels des Stifts (12), sondern auch mittels einer Kappe (20) befestigt ist, wobei der Stift (12) an jeweiligen gegenüberliegenden Enden in jeweiligen gegenüberliegenden Seitenwänden der Kappe (20) gelagert ist.

2. Lenkrollenanordnung nach Anspruch 1, bei der die dritte Achse (H2) die zweite Achse (P) im wesentlichen schneidet.

3. Lenkrollenanordnung nach Anspruch 1 oder 2, bei der die Kappe (20) Teil der Tragvorrichtung (1,20) ist.

4. Lenkrollenanordnung nach einem der vorhergehenden Ansprüche, bei der die Tragvorrichtung (1,20) einen Rahmen (1) eines Rollwagens aufweist und die Rolle (7) eine Bodenrolle (7) des Rollwagens ist.

## Revendications

1. Une disposition de roulette comprenant un rouleau (7) pouvant tourner autour d'un premier axe (H1), des moyens formant potence (8) montant ledit rouleau (7) pour tourner autour dudit axe (H1) et pouvant tourner autour d'un second axe (P) sensiblement perpendiculaire audit premier axe (H1), des moyens de liaison (21) montant lesdits moyens formant potence (8) pour tourner autour dudit second axe (P) et pouvant tourner autour d'un troisième axe (H2) sensiblement perpendiculaire audit second axe (P), des moyens de support (1, 20) montant lesdits moyens de liaison (21) pour tourner autour dudit troisième axe (H2), et des moyens limiteurs (22, 23) limitant le degré de rotation desdits moyens de liaison (21) par rapport auxdits moyens de support (1, 20), lesdits moyens de support (1, 20) montant lesdits moyens de liaison (21) à l'aide d'une tige (12) sensiblement coaxiale audit troisième axe (H2), **caractérisée en ce que** lesdits moyens de support (1, 20) montent lesdits moyens de liaison (21) à l'aide non seulement de ladite tige (12) mais également d'une chape (20), la tige (12) étant portée, aux extrémités opposées respectives, dans des parois latérales opposées respectives de ladite chape (20).

2. Une disposition de roulette selon la revendication 1, dans laquelle ledit troisième axe (H2) intersecte sensiblement ledit second axe (P).

3. Une disposition de roulette selon la revendication 1 ou 2, dans laquelle lesdits moyens de support (1, 20) comprennent ladite chape (20).

4. Une disposition de roulette selon une quelconque revendication précédente, dans laquelle lesdits moyens de support (1, 20) comprennent le bâti (1) d'un chariot et dans lequel ledit rouleau (7) est un rouleau de base (7) dudit chariot.
